# EUROPEAN PATENT SPECIFICATION

(11) **EP 3 599 891 B1**
(45) Date of publication and mention of the grant of the patent: **04.08.2021**
(21) Application number: 18711572.0
(22) Date of filing: 21.03.2018
(51) Int. Cl.: C08B 30/00, C08L 3/04, A23L 29/212

(54) **REMOISTENING OF THERMALLY INHIBITED STARCH AND/OR FLOUR**
RÜCKBEFEUCHTUNG VON THERMISCH INHIBIERTER STÄRKE UND/ODER MEHL
D'HUMIDIFIANT AMIDON INHIBÉS THERMIQUEMENT ET/OU DE LA FARINE

(30) Priority: 22.03.2017 EP 17000468
(43) Date of publication of application: 05.02.2020
(73) Proprietor: BENEO REMY, 3018 Wijgmaal (BE)
(72) Inventor: LEVECKE, Bart, 2860 Sint-Ketelijne-Waver (BE); DE VLEESCHOUWER, Kristel, 1910 Buken (BE); HAJI BEGLI, Alireza, 67305 Ramsen (DE); BRUGGEMAN, Geert, 9220 Hamme (BE); DAENEN, Geert, 3391 Tielt-Winge (BE)
(74) Representative: Koster, Nico
(86) International application number: PCT/EP2018/057130
(87) International publication number: WO 2018/172398

(56) References cited:
- EP-A1- 1 038 882
- EP-A1- 2 674 038
- US-A- 5 718 770

## Description

The invention relates to a process for the treatment of a raw material containing thermally inhibited starch and/or thermally inhibited flour as its largest constituent.

Such a process is known from US-A-5,718,770. In this patent, known to be one of the base patents in the field of thermal inhibition of starches and flours, the preparation of a thermally inhibited starch is disclosed. Upon completion of the thermal inhibition, the thermally inhibited starch is subjected to a washing step (col. 2 line 64). A washing step as meant in US- A-5,718,770 leads to the forming of a slurry; the slurry must then be dried, as starches and flours are usually provided to the market in powder form. Such drying is normally done to a moisture level approaching the equilibrium value of the starch or flour; this equilibrium value is typically between 10 and 15 wt.%.

It is a disadvantage of the known process that the washing / slurry formation and subsequent drying can lead to a partial loss of the properties that were conferred upon the starch or flour by thermal inhibition. One such property is the so-called shear stability, i.e. the ability of the thermally inhibited starch and/or thermally inhibited flour to provide a high viscosity in food products such as sauces where the preparation process entails exposure to high levels of shear. Further properties that constitute typical aims of thermal inhibition are acid tolerance and overall viscosity stability.

It is the objective of the present invention to provide a process for the treatment of a raw material containing thermally inhibited starch and/or thermally inhibited flour which can lead to a reduction or even avoidance of loss of desirable properties.

The objective is achieved in that the process, whereby the moisture content of the raw material is at most 8 wt.%, comprises a remoistening step wherein between 0.1 and 30 wt.% of an aqueous phase is added to the raw material to form a product containing remoistened starch and/or remoistened flour.

It is an advantage of the process of the invention that an improved control over the properties conferred by thermal inhibition is achieved.

It is a further advantage of the process of the invention that it is more economical as compared to the known process: starches and flours are usually provided to the market in powder form so that the known process typically requires the drying of the slurry which requires much energy, whereas the process of the invention requires hardly any or even no further drying at all.

WO-A-2013/173161 discloses that an inhibited non-pregelatinized granular starch suitable for use as a food ingredient in substitution for a chemically modified starch may be prepared by heating non-pregelatinized granular starch in an alcoholic medium in the presence of a base and/or a salt. As noted on page 11 of WO-A-2013/173161, the inhibited starch may be washed with water and then re-dried.

WO-A-2014/042537 discloses a process for producing thermally inhibited starch. The process comprises providing an alkaline starch having a pH between 9.1 and 11.2, adjusting the water content of the starch to between 2 and 22 wt.%, heating the starch between 130 and 190°C for a sufficient time and at a sufficient pressure for the inhibition of the starch to be initiated before the water content has reached a level of 1 wt.% and before the pH has reached a value of 9, continuing heating the starch between 140 and 190°C until viscostability is achieved, and cooling and optionally further processing the starch. As noted on page 6 of WO-A-2014/042537, the thermally inhibited starch may be washed, then dried.

US-A-2015/368370 relates to thermally inhibited starch and starchy flours produced by heat treatment of native starch that is pre-dried where necessary to a dry matter content of more than or equal to 95% by weight, wherein said starch, pre-dried where necessary, is heat treated in the presence of at least 0.1 percent by volume of oxygen at a product temperature in excess of 100°C in a vibrating spiral conveyor.

EP-A-1 038 882 discloses that thermally inhibited starches and flours are prepared by a process comprising dehydrating and heat treating a granular starch or flour.

EP-A-2 674 038 relates to a composition comprising separately by weight from about 20% to about 70% of non-gelatinized starch, from about 5% to about 40% of rice flour, from about 5% to about 30% of high amylose corn starch, and from about 5% to about 40% of heat moisture treated or thermally inhibited flour or starch.

The present invention is defined by the claims.

The present invention discloses a process for the treatment of a raw material containing thermally inhibited starch and/or thermally inhibited flour as its largest constituent, whereby the moisture content of the raw material is at most 8 wt.%, comprising a remoistening step wherein between 0.1 and 30 wt.% of an aqueous phase is added to the raw material to form a product containing remoistened starch and/or remoistened flour, and wherein the amount of aqueous phase added is selected such that the product containing remoistened starch and/or remoistened flour remains in powder form.

The present invention relates to a process for the treatment of a raw material, whereby the raw material contains thermally inhibited starch and/or thermally inhibited flour. Thermally inhibited starch and thermally inhibited flour are both as such known, as illustrated by the documents cited above; they have as an advantage that they are generally not regarded as chemically modified starch or chemically modified flour, do not need to be labelled with a European Union 'E' number or equivalent, and can thus be part of a 'clean label' approach to food product ingredients.

As is known, thermal inhibition of starch comprises a heat treatment at temperatures lying between 100 and 200°C and at an alkaline pH whereby it is ensured that the starch has a moisture content below 1 wt.%. Consequently, upon completion of the thermal inhibition the moisture content of the thermally inhibited starch is below 1 wt.%.

As is known, thermal inhibition of flour comprises a heat treatment at temperatures lying between 100 and 200°C.

In an alternative embodiment of the invention the raw material contains heat-moisture treated starch and/or flour instead of thermally inhibited starch and/or flour, whereby also in this embodiment the moisture content of the raw material is at most 8 wt.%, preferably between 2 and 8 wt.%.

According to the invention, the thermally inhibited starch and/or thermally inhibited flour is the largest constituent - in weight percentage - in the raw material. In a preferred embodiment, the raw material contains at least 40, 50, 60, 70, 75, 80, 85, or even at least 90 wt.% thermally inhibited starch and/or thermally inhibited flour. More preferably, the raw material consists essentially of thermally inhibited starch and/or thermally inhibited flour or even consists of thermally inhibited starch and/or thermally inhibited flour.

As used herein, the terms 'essentially', 'consist(ing) essentially of', essentially all' and equivalents have, unless noted otherwise, in relation to a composition or a process step the usual meaning that deviations in the composition or process step may occur, but only to such an extent that the essential characteristics and effects of the composition or process step are not materially affected by such deviations.

In another preferred embodiment, thermally inhibited starch is the largest constituent - as expressed in weight percentage - in the raw material. Preferably, the raw material contains at least 40, 50, 60, 70, 75, 80, 85, or even at least 90 wt.% thermally inhibited starch. More preferably, the raw material consists essentially of thermally inhibited starch or even consists of thermally inhibited starch.

In yet another preferred embodiment, thermally inhibited flour is the largest constituent - as expressed in weight percentage - in the raw material. Preferably, the raw material contains at least 40, 50, 60, 70, 75, 80, 85, or even at least 90 wt.% thermally inhibited flour. More preferably, the raw material consists essentially of thermally inhibited flour or even consists of thermally inhibited flour.

The thermally inhibited starch or thermally inhibited flour can be derived from a great number of sources, including but not limited to maize (corn), wheat, rice, potato, tapioca, sorghum, barley, rye, and any mixtures thereof. It was found that waxy variants of the starches and/or flours can provide beneficial properties. In one preferred embodiment the thermally inhibited starch and/or thermally inhibited flour are from rice, preferably waxy rice. In a further preferred embodiment the thermally inhibited starch and/or thermally inhibited flour are from maize, preferably waxy maize. In a yet further preferred embodiment the thermally inhibited starch and/or thermally inhibited flour are from wheat, preferably waxy wheat. In a yet further preferred embodiment the thermally inhibited starch and/or thermally inhibited flour are from potato, preferably waxy potato. In an even further preferred embodiment the thermally inhibited starch and/or thermally inhibited flour are from tapioca, preferably waxy tapioca.

Thus the thermally inhibited starch and/or thermally inhibited flour is preferably chosen from the group consisting of thermally inhibited rice starch and/or thermally inhibited rice flour, thermally inhibited wheat starch and/or thermally inhibited wheat flour, thermally inhibited maize starch and/or thermally inhibited maize flour, thermally inhibited potato starch and/or thermally inhibited potato flour, any waxy variants of the aforementioned starches and/or flours, and any mixtures of the aforementioned starches and/or flours. More preferably, the raw material consists essentially of a starch chosen from the group consisting of thermally inhibited rice starch, thermally inhibited waxy rice starch, thermally inhibited wheat starch, thermally inhibited waxy wheat starch, thermally inhibited maize starch, thermally inhibited waxy maize starch, thermally inhibited potato starch, thermally inhibited waxy potato starch, and any mixtures thereof.

The starch in the thermally inhibited starch and/or flour may be in native, granular form; alternatively, the starch in the thermally inhibited starch and/or flour may be in pregelatinised, cold water swellable form. The choice of whether a native or pregelatinised form is chosen will primarily depend on the intended end application of the product containing remoistened starch and/or remoistened flour.

In case the raw material contains, but does not fully consist of thermally inhibited starch and/or thermally inhibited flour, other materials are included in the raw material. Examples of such other materials are: starch that has not been thermally inhibited, flour that has not been thermally inhibited, other carbohydrates, proteins, and lipids.

The moisture content of the raw material can vary within a range, whereby it should be at most 8 wt.% (expressed as percentage of total mass). For example, if the raw material consists of thermally inhibited starch and/or thermally inhibited flour which has not been allowed to pick up moisture via addition of an aqueous phase or from ambient air after being prepared, the moisture content of the raw material will be below 1 wt.% (expressed as percentage of total mass). The moisture content can be somewhat higher in case the raw material contains other materials besides thermally inhibited starch and/or thermally inhibited flour or in case some moisture has been picked up from ambient. It is preferred that the moisture content of the raw material as a whole and also of the thermally inhibited starch and/or flour in the raw material is at most 8.0 wt.% and has not been above 8.0 wt.% since preparation of the thermally inhibited starch and/or flour, that is to say since the thermal inhibition process was completed. More preferably the moisture content of the raw material as a whole and also of the thermally inhibited starch and/or flour in the raw material is at most - and has not been above since the thermally inhibited starch and/or flour were prepared - 7.0, 6.0, 5.0, 4.0, 3.0, 2.0, 1.5, or even at most 1.0 wt.% as percentage of total mass.

In the process of the invention, the raw material is subjected to a remoistening step. In the remoistening step, an aqueous phases is added to the raw material. In doing so, the moisture content of the raw material as a whole is brought closer to - or even at or above - its equilibrium value.

As meant herein and unless specified otherwise, moisture content is determined in an infrared- or halogen moisture analyser, using a sample of 2 g and at a temperature of 130°C. As meant herein, the equilibrium value of moisture content is the value at 23°C and 50% relative humidity.

When the aqueous phase is combined with the raw material, a product is formed which is defined herein as a product containing remoistened starch and/or remoistened flour.

In the context of the present invention, the remoistening step is different from a situation where the raw material is essentially left passive and merely allowed to pick up ambient moisture, in that the remoistening step is a step wherein water is actively introduced into the raw material.

Remoistening according to the invention includes the embodiment that the aqueous phase is included as part of the airflow into a conditioned room.

The aqueous phase has water as its continuous phase and main constituent. Other compounds besides water may be present, and indeed will be in case of for example an industrial application of the invention where use is made of process water or other on-site available water streams. It is however preferred that the aqueous phase is essentially free of other solvents such as ethanol. The aqueous phase preferably contains at least 80, 85, 90, or even at least 95, 96, 97, or 98 wt.% water. In an embodiment of the invention, the aqueous phase consists essentially of, or even consists of water. The aqueous phase is preferably in liquid or vapour form, more preferably in liquid form.

It was found beneficial in case the pH of the aqueous phase is at most 8.5; it was found that avoiding a strong alkaline nature of the aqueous phase or even ensuring an acidic nature into the aqueous phase can contribute to the preservation of the properties of the thermally inhibited starch and/or flour. Thus, more preferably the pH of the aqueous phase is at most 8.0, 7.5, 7.0, 6.5, 6.0, 5.5, or even at most, 5.0, 4.5, 4.0, 3.5, 3.0, 2.5, or 2.0. Preferably, the pH of the aqueous phase is at least 1.0, 1.1, 1.2, 1.3, 1.4, or 1.5. The choice of pH of the aqueous phase primarily depends on the desired pH of the product containing remoistened starch and/or remoistened flour as formed in the remoistening step. It was found that the properties of the thermally inhibited starch and/or thermally inhibited flour are especially well preserved in case the pH of the product containing remoistened starch and/or remoistened flour has a value lying between 4.0 or 4.5 and 9.0, more preferably between 5.0 and 8.9, 8.8, 8.7, 8.6, 8.5, 8.4, 8.3, 8.2, 8.1, 8.0, 7.9, 7.8, 7.6, 7.5, 7.4, 7.3, 7.2, 7.1, 7.0, 6.9, 6.8, 6.7, 6.6, 6.5, 6.4, 6.3, 6.2, 6.1, or even 6.0.

As used herein, the pH of solid materials like thermally inhibited starch and/or thermally inhibited flour or the product containing remoistened starch and/or remoistened flour is determined at room temperature and as follows: 10g of test material to be measured is added to a beaker containing 100 ml of demineralised water, followed by stirring. The pH of the suspension is then measured by using a standard pH measuring device which has been calibrated. The pH as measured is deemed to be the pH of the test material.

The choice of pH of the aqueous phase depends on the pH of the raw material, the percentage of aqueous phase added and the desired pH of the product containing remoistened starch and/or remoistened flour and can thus be readily determined by routine experimentation using the mentioned parameters.

The amount of aqueous phase added to the raw material can vary within wide limits. According to the invention, at least 0.1 wt.% should be added; preferably, at least 0.5, 1.0, 1.5, 2.0, 2.5, 3.0, 3.5, 4.0, 4.5, or even at least 5.0 wt.% is added. The weight percentage of aqueous phase as added in the remoistening step is expressed herein as percentage of the weight of the raw material introduced into the remoistening step. In a preferred embodiment, the amount of aqueous phase added is such that the resulting moisture content of the product containing remoistened starch and/or remoistened flour is brought to a value lying between 6 and 22 wt.%, preferably between 8 or 10 and 14 or 18 wt.%, most preferably to within 4 wt.% of its equilibrium value or even to within 2 wt.% of its equilibrium value. According to the invention, the amount of aqueous phase added should be such that the forming of a slurry of the product containing remoistened starch and/or remoistened flour is avoided; in any case, however, at most 30 wt.% of the aqueous phase should be added. The amount of aqueous phase added is such that the product containing remoistened starch and/or remoistened flour remains in powder form and is not in paste form, nor in slurry form. Preferably, at most 25 wt.% of the aqueous phase is added, more preferably 24, 22, 20, 18, 16, 15, 14, 13, or even at most 12 wt.% is added.

It was found that the addition of the aqueous phase to the raw material can lead to an increase in temperature. Without wishing to be bound to theory, it is assumed that the increase in temperature may be the result of hydration energy, released when water molecules associate with starch molecules. Moreover, and in case the pH of the aqueous phase differs from the pH of the raw material, an increase of temperature may be the result of an energy release originating from a base-acid neutralisation.

In the context of the present invention it was found to be beneficial for maximum preservation of the properties of the thermally inhibited starch and/or thermally inhibited flour to ensure that the temperature does not rise too much and thus remains within certain limits during the remoistening step. In this preferred embodiment of the invention, the temperature of the raw material is or is brought to a value between 0°C and at most 40°C, more preferably at most 35, 30, 25, or even at most 20°C. Overall, including in case there is a temperature increase during the remoistening step, it is preferred that during the remoistening step the temperature of the raw material and of the product containing remoistened starch and/or remoistened flour upon its formation is brought to a value within a range from 0°C to 65°C and is made to remain within the range from 0°C and 65°C, if necessary via the use of cooling of other suitable means.

If the raw material contains starch or flour in native, granular form and the temperature approaches the starting gel point of the raw material, and if it is not desired that gelatinisation takes place, then the moisture content of the raw material and of the product containing remoistened starch and/or remoistened flour should be kept sufficiently low such that gelatinisation does not occur to a significant extent.

It may be necessary to implement cooling or other suitable means in order to ensure that the temperature of the product containing remoistened starch and/or remoistened flour remains within the desired range. Preferably, the temperature of the raw material and of the product containing remoistened starch and/or remoistened flour upon its formation is brought to within a range from 0°C to at most 60, 55, 50, 45, 40, or even at most 35°C, and is made to remain within a range from 0°C to at most 60, 55, 50, 45, 40, or even at most 35°C for the duration of the process of the invention.

In order to ensure an even distribution of the aqueous phase over the raw material and in order to have a good control over any temperature effects, it is preferred to ensure that homogenization is taking place during the remoistening step. An advantage of homogenization is that it helps to ensure consistent quality of the product containing remoistened starch and/or remoistened flour.

The addition of the aqueous phase to the raw material can be done in any suitable apparatus, such as for example a mixer. One suitable type of mixer is a ringlayer mixer equipped with one or more nozzles to introduce the aqueous phase into the raw material being transported through the ringlayer mixer. Ringlayer mixers are as such known, from suppliers such as for example Amixon™, Lodige™, or AVA-Huep™. Another suitable type of apparatus is a plough shear mixer; such mixers are as such known, from suppliers such as for example Lodige™.

As indicated above, the raw material preferably has a rather low moisture content. It is however known that keeping a low-moisture starch or flour in stock brings safety risks with it, as these products are very susceptible to dust explosion. It is thus preferred that the remoistening step is done not later than three months after the thermal inhibition of the starch and/or flour in the raw material has been done. More preferably, the remoistening step is done not later than two months, one month, two weeks, one week, or even not later than six, five, four, three, two, or even not later than one day after the thermal inhibition of the starch and/or flour in the raw material has been done. In a preferred embodiment, the remoistening step is done within one hour or even immediately after the thermal inhibition of the starch and/or flour in the raw material has been done.

One characteristic of the process of the invention is that it does not comprise a washing or slurrying step, wherein a slurry is formed that must be dried subsequently. As is known, a slurry is a suspension of solid particles in a liquid phase whereby the liquid phase is the continuous phase. As a consequence, the process of the invention does not include an action to remove compounds from the raw material or from the product formed in any significant manner. This in turn means that it is not possible to rely on the process of the invention to remove certain undesired compounds such as compounds causing an undesired colour from the thermally inhibited starch and/or flour in the raw material. Care should thus be taken that such undesired compound are not formed during thermal inhibition in the first place. In a preferred embodiment of the invention, the thermal inhibition of the starch and/or the flour in the raw material was done in a vibrating spiral conveyor. Such a vibrating spiral conveyor is as such known, from for example US-A-2015/368370. One known supplier of such equipment is Revtech Process Systems.

In one embodiment of the invention the raw material consists of thermally inhibited waxy rice starch having a moisture content of at most 4 wt.% or even at most 2 wt.%, no slurrying step is done, the aqueous phase consists essentially of liquid water, the pH of the aqueous phase is below 8.0, the remoistening step is done within one week of the preparation of the raw material, the temperature of the raw material and of the product containing remoistened starch are below 50°C during the entire process of the invention, the moisture content of the product containing remoistened starch is below 14 wt.%, and the pH of the product containing remoistened starch is below 8.0. Preferred variations within the scope of this embodiment can be based on preferred ranges as described hereinabove.

In one embodiment of the invention the raw material contains at least 40 wt.% of thermally inhibited waxy rice starch; the raw material has a moisture content of at most 6 wt.% or even at most 2 wt.%, no slurrying step is done, the aqueous phase consists of liquid water, the pH of the aqueous phase is below 8.0, the remoistening step is done within one week of the preparation of the raw material, the temperature of the raw material and of the product containing remoistened starch are below 50°C during the entire process of the invention, the moisture content of the product containing remoistened starch is below 14 wt.%, and the pH of the product containing remoistened starch is below 8.0. Preferred variations within the scope of this embodiment can be based on preferred ranges as described hereinabove.

In another embodiment of the invention the raw material consists of thermally inhibited waxy corn starch having a moisture content of at most 2 wt.%, no slurrying step is done, the aqueous phase consists of liquid water, the pH of the aqueous phase is below 8.0, the remoistening step is done within one week of the preparation of the raw material, the temperature of the raw material and of the product containing remoistened starch are below 50°C during the entire process of the invention, the moisture content of the product containing remoistened starch is below 14 wt.%, and the pH of the product containing remoistened starch is below 8.0. Preferred variations within the scope of this embodiment can be based on preferred ranges as described hereinabove.

In yet a further embodiment of the invention the raw material consists of thermally inhibited waxy rice flour having a moisture content of at most 6 wt.%, no slurrying step is done, the aqueous phase consists of liquid water, the pH of the aqueous phase is below 8.0, the remoistening step is done within one week of the preparation of the raw material, the temperature of the raw material and of the product containing remoistened flour are below 50°C during the entire process of the invention, the moisture content of the product containing remoistened flour is below 14 wt.%, and the pH of the product containing remoistened flour is below 8.0. Preferred variations within the scope of this embodiment can be based on preferred ranges as described hereinabove.

In yet a further embodiment of the invention the raw material contains or consists of thermally inhibited waxy wheat starch; the raw material has a moisture content of at most 2 wt.%, no slurrying step is done, the aqueous phase consists of liquid water, the pH of the aqueous phase is below 8.0 or even below 6.0, the remoistening step is done within one week of the preparation of the raw material, the temperature of the raw material and of the product containing remoistened flour are below 50°C during the entire process of the invention, the moisture content of the product containing remoistened flour is below 14 wt.%, and the pH of the product containing remoistened flour is below 8.0. Preferred variations within the scope of this embodiment can be based on preferred ranges as described hereinabove.

In yet a further embodiment of the invention the raw material consists of thermally inhibited waxy rice starch; the raw material has a moisture content of at most 2 wt.%, no slurrying step is done, the aqueous phase consists of liquid water, the pH of the aqueous phase is below 7.0 or even below 4.0, the remoistening step is done within one week of the preparation of the raw material, the temperature of the raw material and of the product containing remoistened flour are below 50°C during the entire process of the invention, the moisture content of the product containing remoistened flour is below 14 wt.%, and the pH of the product containing remoistened flour is below 7.5. Preferred variations within the scope of this embodiment can be based on preferred ranges as described hereinabove.

In the figures:

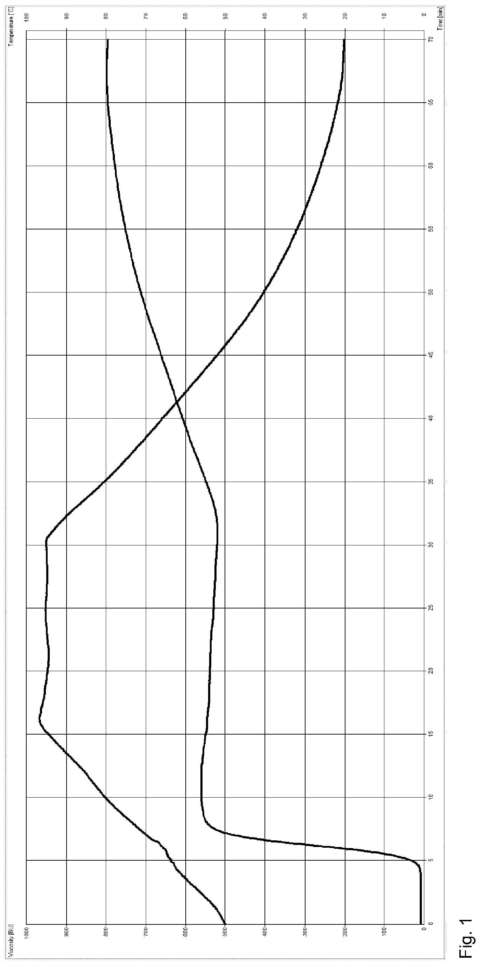

Figure 1 shows a Brabender curve of the remoistened starch of Example 1.

The invention will be illustrated with the following examples, without being limited thereto.

### Examples 1 - 3

A thermally inhibited waxy rice starch was, 13 days after its inhibition (during which time the thermally inhibited waxy rice starch was stored under ambient conditions in closed big bags having an inner liner), subjected to a remoistening step. The remoistening was executed in a Lödige ring layer mixer CM 20. 10 kg of raw material was used per example. The temperature, pH, and moisture content of the raw material are given in Table 1. Also given in Table 1 are temperature and pH of the aqueous phase, which consisted of liquid water, and certain properties of the product consisting of remoistened starch upon its formation (moisture content, temperature, viscosity, tan δ, and pH). In Example 3, the low pH of the aqueous phase was achieved via the addition of sulfuric acid, starting from the same water as used in Examples 1 and 2. Additionally, a Brabender curve of the remoistened starch of Example 1 is given in Figure 1. The Brabender curve was determined at 6 wt.% dry matter in de-ionised water; the total sample weight was 500 g, the measuring speed was 75/min. Figure 1 shows, as is customary, two curves: both the measured temperature profile - this is the curve starting at 50°C, going up to about 95°C, staying at about 95°C during 15 minutes, followed by cooling to 20°C - as well as the viscosity curve expressed in Brabender units (BU).

The gel was prepared at 94°C in a Stephan UMSK 5 cooker, using 135 g (dry matter) starch, citric acid and trisodium citrate to acidify and buffer to pH 3.6, and sufficient water to obtain a total weight of 2,500 g, whereby the citric acid and trisodium citrate were combined with the water before the starch was added. After cooling to 25°C, an intensive shearing action on the gel was done by means of a Silverson L4RT mixer using a square hole (2.4 mm) high shear screen mixer head at 5,000 rpm during 1 minute. The selection of rpm is done based a.o. on the nature of the gel; thus, in further examples hereinbelow it may be that another rpm is chosen in order to obtain the most meaningful insight into material behaviour. The rpm as used will be reflected in the notation of viscosity parameter 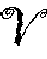 by means of a subscript, whereby 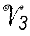 indicates an rpm of 3,000, 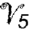 indicates an rpm of 5,000, etc..

The viscosity and tan δ of a gel, made from the starch concerned, that had first been subjected to an intensive shear action, were determined at a temperature of 20°C by means of an Anton Paar Rheometer (parallel plate-plate configuration; the plate diameter was 40 mm). As meant herein, the term tan δ is used in its common meaning of being a loss tangent in the linear viscoelastic region. It gives a ratio between viscous and elastic properties of a system, showing which one is the dominant one. With a tan δ value of 1, the elastic and viscous properties of the material are equal. The smaller the loss tangent is, the more elastic is the material.

The viscosity at 0.88 s⁻¹ was determined in a viscosity curve measurement wherein the shear rate varied from 0.1 to 100 s⁻¹.

The tan δ was determined from the results of an amplitude sweep measurement having the following characteristics: deformation from 0.01 to 1000%, frequency 1 Hz.

In the Examples and Comparative Experiments herein, the tan δ is always determined on a gel that has first been subjected to shear forces as described above, at the rpm as given per Example or Comparative Experiment.

**Table 1**

| # | Raw Material | | | Aqueous phase | | Cooling/heating during remoistening | Remoistened Starch | | | | |
|---|---|---|---|---|---|---|---|---|---|---|---|
| | Temp. (°C) | pH | Moisture (wt.%) | pH | Temp. (°C) | | 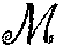 | 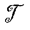 | 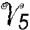 | tan δ | pH |
| 1 | 20 | 7.8 | 0.4 | 7.3 | 19 | None - no use of double jacket | 12.2 | 37 | 5130 | 0.51 | 7.6 |
| 2 | 20 | 7.8 | 0.4 | 7.3 | 19 | Heating - water at 83°C was applied to the double-jacket | 11.0 | 64* | 4570 | 0.54 | 7.6 |
| 3 | 20 | 7.8 | 0.4 | 1.6 | 19 | None - no use of double jacket | 12.0 | 41 | 5440 | 0.49 | 6.5 |

| | | | | | | | | | | | |
|---|---|---|---|---|---|---|---|---|---|---|---|
| Legend to Table 1: 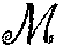 = Moisture content upon completion of the remoistening step (wt.%) 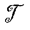 = Temperature upon completion of remoistening step (°C) 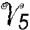 = Viscosity (in mPa.s) at a shear rate of 0.88 s⁻1 of a gel of the starch that was first subjected to shearing at 5000 rpm * = No gelatinisation was observed, a.o. due to the moisture content not being high enough for gelatinisation to occur The tan δ was determined via amplitude sweep at a gel of the starch that was first subjected to shearing at the same rpm as was the gel for the determination of 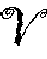 . | | | | | | | | | | | |

### Comparative Experiment A

A sample of the same raw material as used in Examples 1 - 3 was used to form a slurry, using the same aqueous phase as used in Examples 1 - 2. The slurry contained 30 wt.% of the raw material. The slurry was subsequently dried to a moisture content of 12 wt.% to form a slurried-dried starch by means of centrifugation followed by oven-drying at 40°C. The properties of the slurried-dried starch were determined to be:

| | |
|---|---|
| 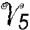 | 2590 mPa.s |
| tan δ | 0.88 |

As is clear from the results of the Examples and the Comparative Experiment A, the slurried-dried starch has suffered a significant worsening in properties as compared to the remoistened starch of the invention as the slurried-dried starch had a much lower viscosity after shearing and had less elastic properties as seen in the higher tan δ (as is known, the smaller the loss tangent tan δ is, the more elastic is the material).

### Comparative Experiment B

The properties of the thermally inhibited waxy rice starch as such, i.e. the raw material as used in Examples 1 - 3 without having been subjected to any subsequent process step such as remoistening or slurrying, were measured. The properties were determined to be:

| | |
|---|---|
| 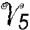 | 5940 mPa.s |
| tan δ | 0.46 |

The results of Comparative Experiment B show that the step of remoistening according to the invention does not lead to a significant loss of properties, as can be seen by comparing the results with those of Examples 1 - 3; this in contrast to a known treatment such as the slurrying step of Comparative Experiment A.

### Example 4

A raw material consisting of a thermally inhibited waxy rice starch, was subjected to a remoistening step. Compared to the thermally inhibited waxy rice starch of examples 1 - 3, the thermally inhibited waxy rice starch as used in this Example 4 is characterised by a higher degree of thermal inhibition. The raw material was, seven days after its inhibition (during which time the thermally inhibited waxy rice starch was stored under ambient conditions in closed PE containers), subjected to a remoistening step. The remoistening was executed by means of a lab scale hand sprayer. The pH of the aqueous phase was 7.7. The pH of the remoistened starch was 6.5. The determination of viscosity and tan δ of a gel, made from the remoistened starch, that had first been subjected to an intensive shear action was determined as described in Examples 1 - 3 with the exception of the rpm in the Silverson mixer. The mixer was set at 9,000 rpm, indicated below with subscript '9' at viscosity parameter 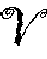 . The results were as follows:

| | |
|---|---|
| 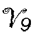 | 17,500 mPa.s |
| tan δ | 0.13 |

### Comparative experiment C

A sample of the same raw material as used in Example 4 was used to form a slurry using a the same aqueous phase as in Example 4. The slurry contained 30 wt.% of the raw material. The pH of the slurry was 7.3. The slurry was subsequently dried to a moisture content of 12 wt.% to form a slurried-dried starch by means of centrifugation followed by oven-drying at 40°C. The properties of the slurried-dried starch were then determined to be:

| | |
|---|---|
| 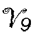 | 13,500 mPa.s |
| tan δ | 0.15 |

### Comparative Experiment D

The properties of the thermally inhibited waxy rice starch as such, i.e. the raw material as used in Example 4 without having been subjected to any subsequent process step such as remoistening or slurrying, were measured. The properties were determined to be:

| | |
|---|---|
| 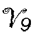 | 18,900 mPa.s |
| tan δ | 0.12 |

### Example 5

A thermally inhibited waxy maize starch was, three months after its inhibition, used as raw material for a remoistening step. The pH of the aqueous phase was 7.7. The remoistening step and subsequent measurements were executed as described in Examples 1 - 3, with the exception of the rpm in the Silverson mixer. The mixer was set at 9,000 rpm. The pH of the remoistened starch was 7.2. The results were as follows:

| | |
|---|---|
| 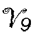 | 12,200 mPa.s |
| tan δ | 0.23 |

### Comparative experiment E

The properties of the thermally inhibited waxy maize starch that was used as raw material in Example 5 as such, i.e. without having been subjected to remoistening or slurrying, were measured. The properties were determined to be:

| | |
|---|---|
| 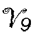 | 13,800 mPa.s |
| tan δ | 0.21 |

### Comparative Experiment F

A sample of the same raw material as used in Example 5 was used to form a slurry, using the same aqueous phase as used in Example 5. The slurry was subsequently dried to a moisture content of 12 wt.% by means of filtration under vacuum and further drying in a rapid dryer (TG 200, Retsch) to form a slurried-dried starch. The properties of the slurried-dried starch were determined to be:

| | |
|---|---|
| 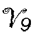 | 8,570 mPa.s |
| tan δ | 0.31 |

### Examples 6, 7

A thermally inhibited waxy wheat starch was, 14 days after its inhibition, used as raw material for a remoistening step. The remoistening step and subsequent measurements were executed as described in Examples 1 - 3, with the exception of the rpm in the Silverson mixer - the mixer was set at 7,000 rpm - and the execution of the remoistening which was done by means of a lab scale hand sprayer. The results were as follows:

| Example | 6 | 7 |
|---|---|---|
| pH of aqueous phase | 7.7 | 5.8 |
| pH of remoistened starch | 7.2 | 6.7 |
| 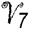 (mPa.s) | 7,450 | 9,870 |
| tan δ | 0.42 | 0.34 |

### Comparative experiment G

The properties of the thermally inhibited waxy wheat starch that was used as raw material in Examples 6 and 7 as such, i.e. without having been subjected to remoistening or slurrying, were measured. The properties were determined to be:

| | |
|---|---|
| 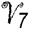 | 10,000 mPa.s |
| tan δ | 0.34 |

### Comparative Experiment H

A sample of the same raw material as used in Examples 6 and 7 was used to form a slurry, using the same aqueous phase as used in Example 6. The slurry was subsequently dried to a moisture content of 12 wt.% by means of filtration under vacuum and further drying in a rapid dryer (TG 200, Retsch) to form a slurried-dried starch. The properties of the slurried-dried starch were determined to be:

| | |
|---|---|
| 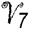 | 5,440 mPa.s |
| tan δ | 0.51 |

### Example 8

A thermally inhibited waxy rice flour was, 21 days after its inhibition, used as raw material for a remoistening step. The remoistening step and subsequent measurements were executed as described in Examples 1 - 3, with the exception of the following points:
- The gel preparation in the Stephan cooker was done with 225 g (dry matter) of flour, still on a total weight of 2,500 g;
- The rpm in the Silverson mixer. The mixer was set at 3,000 rpm; and
- The remoistening was done by means of a lab scale hand sprayer.
The results were as follows:

| | |
|---|---|
| 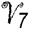 | 22,500 mPa.s |
| tan δ | 0.57 |

### Comparative experiment I

The properties of the thermally inhibited waxy rice flour that was used as raw material in Example 8 as such, i.e. without having been subjected to remoistening or slurrying, were measured. The properties were determined to be:

| | |
|---|---|
| 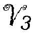 | 20,900 mPa.s |
| tan δ | 0.58 |

### Comparative Experiment J

A sample of the same raw material as used in Example 8 was used to form a slurry, using the same aqueous phase as used in Example 8. The slurry was subsequently dried to a moisture content of 12 wt.% by means of filtration under vacuum and further drying in a rapid dryer (TG 200, Retsch) to form a slurried-dried starch. The properties of the slurried-dried starch were determined to be:

| | |
|---|---|
| 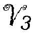 | 18,700 mPa.s |
| tan δ | 0.65 |

The above Examples and Comparative Experiments show that the properties of a raw material containing thermally inhibited starch of flour are preserved better in the process of the invention as compared to the known process of slurrying followed by drying.

### Examples 9 - 11

A thermally inhibited waxy rice starch was, 14 days after its inhibition, used as raw material for a remoistening step. The remoistening step and subsequent measurements were executed as described in Examples 1 - 3. The results were as follows:

| Example | 9 | 10 | 11 |
|---|---|---|---|
| pH of aqueous phase | 8.0 | 2.5 | 1.5 |
| pH of remoistened starch | 7.6 | 7.3 | 6.5 |
| 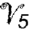 (mPa.s) | 7,260 | 9,530 | 9,770 |
| tan δ | 0.36 | 0.36 | 0.35 |

### Comparative experiment K

The properties of the thermally inhibited waxy rice flour that was used as raw material in Examples 9 - 11 as such, i.e. without having been subjected to remoistening, were measured. The properties were determined to be:

| | |
|---|---|
| 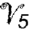 | 11,800 mPa.s |
| tan δ | 0.30 |

## Claims

1. Process for the treatment of a raw material containing thermally inhibited starch and/or thermally inhibited flour as its largest constituent, whereby the moisture content of the raw material is at most 8 wt.%, comprising a remoistening step wherein between 0.1 and 30 wt.% of an aqueous phase is added to the raw material to form a product containing remoistened starch and/or remoistened flour, and wherein the amount of aqueous phase added is selected such that the product containing remoistened starch and/or remoistened flour remains in powder form.

2. Process according to claim 1, wherein the remoistening step is done such that the forming of a slurry of the product containing remoistened starch and/or remoistened flour is avoided.

3. Process according to claim 1 or 2, wherein the raw material contains at least 75 wt.% thermally inhibited starch or at least 75 wt.% thermally inhibited flour.

4. Process according to any one of claims 1 - 3, wherein the raw material consists essentially of thermally inhibited starch, thermally inhibited flour, or mixtures thereof.

5. Process according to any one of claims 1 - 4, wherein the moisture content of the raw material is at most 5 wt.%, and has not been above 5 wt.% since the thermally inhibited starch and/or thermally inhibited flour in the raw material were prepared.

6. Process according to any one of claims 1 - 5, wherein the moisture content of the raw material is at most 2 wt.%, and has not been above 2 wt.% since the thermally inhibited starch and/or thermally inhibited flour in the raw material were prepared.

7. Process according to any one of claims 1 - 6, wherein during the remoistening step the temperature of the raw material and of the product upon its formation is brought to, and made to remain within, a range from 0°C to 65°C, via cooling or via other suitable means.

8. Process according to any one of claims 1 - 7, wherein the remoistening step is done such that the moisture content of the raw material as a whole is brought closer to its equilibrium value..

9. Process according to any one of claims 1 - 8, wherein the pH of the aqueous phase is at most 8.5 or at most 8.0.

10. Process according to any one of claims 1 - 9, wherein the pH of the product upon its formation in the remoistening step is brought to a value lying between 4.0 and 9.0 or to a value lying between 4.5 and 8.0, via control of the pH of the aqueous phase or via other suitable means.

11. Process according to any one of claims 1 - 10, whereby the remoistening step is done such that the moisture content of the product is brought to a value lying between 6 and 16 wt.% or to within 4 wt.% of its equilibrium value.

12. Process according to any one of claims 1 - 11, wherein the remoistening step is done not later than three months after the thermal inhibition of the starch and/or flour has been done.

13. Process according to any one of claims 1 - 12, wherein the thermally inhibited starch and/or thermally inhibited flour is chosen from the group consisting of thermally inhibited rice starch and/or thermally inhibited rice flour, thermally inhibited wheat starch and/or thermally inhibited wheat flour, thermally inhibited maize starch and/or thermally inhibited maize flour, thermally inhibited potato starch and/or thermally inhibited potato flour, any waxy variants of the aforementioned starches and/or flours, and any mixtures of the aforementioned starches and/or flours.

14. Process according to any one of claims 1 - 13, wherein the raw material consists essentially of a starch chosen from the group consisting of thermally inhibited rice starch, thermally inhibited waxy rice starch, thermally inhibited wheat starch, thermally inhibited waxy wheat starch, thermally inhibited maize starch, thermally inhibited waxy maize starch, thermally inhibited potato starch, thermally inhibited waxy potato starch, and any mixtures thereof.

15. Process according to any one of claims 1 - 14, whereby the process does not comprise a slurrying step, wherein a slurry of the raw material or of the product containing remoistened starch and/or remoistened flour would be formed.

## Patentansprüche

1. Verfahren zur Behandlung eines Rohmaterials, das thermisch inhibierte Stärke und/oder thermisch inhibiertes Mehl als dessen größten Bestandteil enthält, wobei der Feuchtigkeitsgehalt des Rohmaterials höchstens 8 Gew.% beträgt, umfassend einen Rückbefeuchtungsschritt, in dem zwischen 0,1 und 30 Gew.% einer wässrigen Phase zu dem Rohmaterial gegeben werden, um ein Produkt zu bilden, das rückbefeuchtete Stärke und/oder rückbefeuchtetes Mehl enthält, und wobei die Menge der zufügten wässrigen Phase so gewählt wird, dass das Produkt, welches rückbefeuchtete Stärke und/oder rückbefeuchtetes Mehl enthält, in Pulverform bleibt.

2. Verfahren nach Anspruch 1, wobei der Rückbefeuchtungsschritt so durchgeführt wird, dass das Bilden einer Aufschlämmung des Produkts, welches rückbefeuchtete Stärke und/oder rückbefeuchtetes Mehl enthält, vermieden wird.

3. Verfahren nach Anspruch 1 oder 2, wobei das Rohmaterial mindestens 75 Gew.% thermisch inhibierte Stärke oder mindestens 75 Gew.% thermisch inhibiertes Mehl enthält.

4. Verfahren nach einem der Ansprüche 1 bis 3, wobei das Rohmaterial im Wesentlichen aus thermisch inhibierter Stärke, thermisch inhibiertem Mehl oder Mischungen davon besteht.

5. Verfahren nach einem der Ansprüche 1 bis 4, wobei der Feuchtigkeitsgehalt des Rohmaterials höchstens 5 Gew.% beträgt und nicht oberhalb von 5 Gew.% gewesen ist, seit die thermisch inhibierte Stärke und/oder das thermisch inhibierte Mehl in dem Rohmaterial hergestellt wurde(n).

6. Verfahren nach einem der Ansprüche 1 bis 5, wobei der Feuchtigkeitsgehalt des Rohmaterials höchstens 2 Gew.% beträgt und nicht oberhalb von 2 Gew.% gewesen ist, seit die thermisch inhibierte Stärke und/oder das thermisch inhibierte Mehl in dem Rohmaterial hergestellt wurde(n).

7. Verfahren nach einem der Ansprüche 1 bis 6, wobei die Temperatur des Rohmaterials und des Produkts bei dessen Bildung während des Rückbefeuchtungsschritts mittels Kühlen oder mittels eines anderen geeigneten Mittels auf einen Bereich von 0 °C bis 65 °C gebracht wird, und dazu gebracht wird, in diesem Bereich zu bleiben.

8. Verfahren nach einem der Ansprüche 1 bis 7, wobei der Rückbefeuchtungsschritt so durchgeführt wird, dass der Feuchtigkeitsgehalt des Rohmaterials als Ganzes näher an seinen Gleichgewichtswert gebracht wird.

9. Verfahren nach einem der Ansprüche 1 bis 8, wobei der pH-Wert der wässrigen Phase höchstens 8,5 oder höchstens 8,0 beträgt.

10. Verfahren nach einem der Ansprüche 1 bis 9, wobei der pH-Wert des Produkts bei dessen Bildung in dem Rückbefeuchtungsschritt mittels Steuerung des pH-Werts der wässrigen Phase oder mittels eines anderen geeigneten Mittels auf einen Wert, der zwischen 4,0 und 9,0 liegt, oder einen Wert, der zwischen 4,5 und 8,0 liegt, gebracht wird.

11. Verfahren nach einem der Ansprüche 1 bis 10, wobei der Rückbefeuchtungsschritt so durchgeführt wird, dass der Feuchtigkeitsgehalt des Produkts auf einen Wert gebracht wird, der zwischen 6 und 16 Gew.% oder innerhalb von 4 Gew.% zu seinem Gleichgewichtswert liegt.

12. Verfahren nach einem der Ansprüche 1 bis 11, wobei der Rückbefeuchtungsschritt nicht später als drei Monate nach Durchführen der thermischen Inhibierung der Stärke und/oder des Mehls erfolgt.

13. Verfahren nach einem der Ansprüche 1 bis 12, wobei die thermisch inhibierte Stärke und/oder das thermisch inhibierte Mehl ausgewählt ist aus der Gruppe bestehend aus thermisch inhibierter Reisstärke und/oder thermisch inhibiertem Reismehl, thermisch inhibierter Weizenstärke und/oder thermisch inhibiertem Weizenmehl, thermisch inhibierter Maisstärke und/oder thermisch inhibiertem Maismehl, thermisch inhibierter Kartoffelstärke und/oder thermisch inhibiertem Kartoffelmehl, jeglichen Wachsvarianten der genannten Stärken und/oder Mehle und jeglichen Mischungen der genannten Stärken und/oder Mehle.

14. Verfahren nach einem der Ansprüche 1 bis 13, wobei das Rohmaterial im Wesentlichen aus einer Stärke ausgewählt aus der Gruppe bestehend aus thermisch inhibierter Reisstärke, thermisch inhibierter Wachsreisstärke, thermisch inhibierter Weizenstärke, thermisch inhibierter Wachsweizenstärke, thermisch inhibierter Maisstärke, thermisch inhibierter Wachsmaisstärke, thermisch inhibierter Kartoffelstärke, thermisch inhibierter Wachskartoffelstärke und jeglichen Mischungen davon besteht.

15. Verfahren nach einem der Ansprüche 1 bis 14, wobei das Verfahren keinen Aufschlämmungsschritt umfasst, bei dem eine Aufschlämmung des Rohmaterials oder des Produkts, welches rückbefeuchtete Stärke und/oder rückbefeuchtetes Mehl enthält, gebildet werden würde.

## Revendications

1. Procédé de traitement d'une matière première contenant de l'amidon thermiquement inhibé et/ou de la farine thermiquement inhibée comme constituant le plus important, où la teneur en humidité de la matière première est d'au plus 8% en poids, comprenant une étape de réhumidification où entre 0,1 et 30% en poids d'une phase aqueuse sont ajoutés à la matière première afin de former un produit contenant de l'amidon réhumidifié et/ou de la farine réhumidifiée, et où la quantité de phase aqueuse ajoutée est choisie de façon à ce que le produit contenant de l'amidon réhumidifié et/ou de la farine réhumidifiée reste sous forme pulvérulente.

2. Procédé selon la revendication 1, dans lequel l'étape de réhumidification est effectuée de façon à éviter la formation d'une suspension du produit contenant de l'amidon réhumidifié et/ou de la farine réhumidifiée.

3. Procédé selon la revendication 1 ou 2, dans lequel la matière première contient au moins 75% en poids d'amidon thermiquement inhibé ou au moins 75% en poids de farine thermiquement inhibée.

4. Procédé selon l'une quelconque des revendications 1-3, dans lequel la matière première est constituée essentiellement d'amidon thermiquement inhibé, de farine thermiquement inhibée, ou de mélanges de ceux-ci.

5. Procédé selon l'une quelconque des revendications 1-4, dans lequel la teneur en humidité de la matière première est d'au plus 5% en poids, et n'a pas été supérieure à 5% en poids depuis le moment où l'amidon thermiquement inhibé et/ou la farine thermiquement inhibée dans la matière première ont été préparés.

6. Procédé selon l'une quelconque des revendications 1-5, dans lequel la teneur en humidité de la matière première est d'au plus 2% en poids, et n'a pas été supérieure à 2% en poids depuis le moment où l'amidon thermiquement inhibé et/ou la farine thermiquement inhibée dans la matière première ont été préparés.

7. Procédé selon l'une quelconque des revendications 1-6, dans lequel, pendant l'étape de réhumidification, on amène la température de la matière première et du produit lors de sa formation dans une plage allant de 0°C à 65°C, et on l'y maintient, par un refroidissement ou par un autre moyen convenable.

8. Procédé selon l'une quelconque des revendications 1-7, dans lequel l'étape de réhumidification est effectuée de façon à ce que la teneur en humidité de la matière première dans son ensemble soit amenée près de sa valeur d'équilibre.

9. Procédé selon l'une quelconque des revendications 1-8, dans lequel le pH de la phase aqueuse est d'au plus 8,5 ou d'au plus 8,0.

10. Procédé selon l'une quelconque des revendications 1-9, dans lequel on amène le pH du produit lors de sa formation dans l'étape de réhumidification jusqu'à une valeur se trouvant entre 4,0 et 9,0 ou une valeur se trouvant entre 4,5 et 8,0, par le contrôle du pH de la phase aqueuse ou par un autre moyen convenable.

11. Procédé selon l'une quelconque des revendications 1-10, dans lequel l'étape de réhumidification est effectuée de façon à ce que la teneur en humidité du produit soit amenée à une valeur se trouvant entre 6 et 16% en poids ou à 4% en poids près de sa valeur d'équilibre.

12. Procédé selon l'une quelconque des revendications 1-11, dans lequel l'étape de réhumidification est effectuée au plus trois mois après la mise en œuvre de l'inhibition thermique de l'amidon et/ou de la farine.

13. Procédé selon l'une quelconque des revendications 1-12, dans lequel l'amidon thermiquement inhibé et/ou la farine thermiquement inhibée sont choisis dans le groupe constitué par l'amidon de riz thermiquement inhibé et/ou la farine de riz thermiquement inhibée, l'amidon de blé thermiquement inhibé et/ou la farine de blé thermiquement inhibée, l'amidon de maïs thermiquement inhibé et/ou la farine de maïs thermiquement inhibée, l'amidon de pomme de terre thermiquement inhibé et/ou la farine de pomme de terre thermiquement inhibée, un variant cireux quelconque des amidons et/ou des farines susmentionnés, et un mélange quelconque des amidons et/ou des farines susmentionnés.

14. Procédé selon l'une quelconque des revendications 1-13, dans lequel la matière première est constituée essentiellement d'un amidon choisi dans le groupe constitué par l'amidon de riz thermiquement inhibé, l'amidon de riz cireux thermiquement inhibé, l'amidon de blé thermiquement inhibé, l'amidon de blé cireux thermiquement inhibé, l'amidon de maïs thermiquement inhibé, l'amidon de maïs cireux thermiquement inhibé, l'amidon de pomme de terre thermiquement inhibé, l'amidon de pomme de terre cireux thermiquement inhibé, et un mélange quelconque de ceux-ci.

15. Procédé selon l'une quelconque des revendications 1-14, le procédé ne comprenant pas d'étape de mise en suspension, dans laquelle une suspension de la matière première ou du produit contenant de l'amidon réhumidifié et/ou de la farine réhumidifiée aurait été formée.
